# EUROPEAN PATENT APPLICATION

(11) **EP 4 826 794 A1**
(43) Date of publication of application: **21.10.2026**
(21) Application number: 26172555.0
(22) Date of filing: 15.04.2026
(51) Int. Cl.: H01M 4/525, C01G 53/42, C08F 128/02, H01M 4/62, H01M 4/131

(54) **POSITIVE ELECTRODE FOR RECHARGEABLE LITHIUM BATTERY AND RECHARGEABLE LITHIUM BATTERY INCLUDING SAME**

(30) Priority: 15.04.2025 KR 20250049050
(71) Applicant: SAMSUNG SDI CO., LTD., Yongin-si, Gyeonggi-do 17084 (KR)
(72) Inventor: KIM, Sundae, 17084 Yongin-si, Gyeonggi-do (KR); JEONG, Euisoo, 17084 Yongin-si, Gyeonggi-do (KR); KIM, Myunghoon, 17084 Yongin-si, Gyeonggi-do (KR); KIM, Sanghoon, 17084 Yongin-si, Gyeonggi-do (KR); KIM, Hyunwoo, 17084 Yongin-si, Gyeonggi-do (KR); LIM, Jinhyeok, 17084 Yongin-si, Gyeonggi-do (KR)
(74) Representative: Michalski Hüttermann & Partner mbB

(57) **Abstract**

Disclosed are a positive electrode for a rechargeable lithium battery, and a rechargeable lithium battery including the positive electrode. The positive electrode for a rechargeable lithium battery includes a positive electrode active material layer including a lithium nickel-based positive electrode active material, a polymer, and a linear conductive material; and a current collector supporting the positive electrode active material layer.

## Description

### BACKGROUND

### 1. Field

The present disclosure relates to a positive electrode for rechargeable lithium battery, and a rechargeable lithium battery including the positive electrode.

### 2. Description of the Related Art

With increasing supply of electronic devices using batteries such as, e.g., mobile phones, notebook computers, electric vehicles, and the like, demand for rechargeable batteries with high energy density and high capacity is increasing. Accordingly, research and development for improving the performance of a rechargeable lithium battery are being actively conducted.

A rechargeable lithium battery typically includes a positive electrode and a negative electrode, both electrodes including active materials capable of intercalation and deintercalation of lithium ions, and an electrolyte, and produces electrical energy by oxidation and reduction reactions when lithium ions are intercalated/deintercalated at the positive electrode and the negative electrode.

As the positive electrode active material of the positive electrode, a lithium nickel-based positive electrode active material may be exemplified, and among these, an active material having a high nickel content may exhibit a high capacity, and thus its use is increasing. However, such an active material with a high nickel content (high-Ni active material) presents a challenge in that residual lithium is present in a substantial or excessive amount.

### SUMMARY

Some example embodiments include a positive electrode for rechargeable lithium battery that has desired or improved adhesive strength between a current collector and a positive electrode active material layer and exhibits low resistance.

Some example embodiments include a rechargeable lithium battery including the positive electrode.

Some example embodiments include a positive electrode for rechargeable lithium battery including a positive electrode active material layer including a lithium nickel-based positive electrode active material, a polymer including a repeating unit of Chemical Formula 1, and a linear conductive material; and a current collector supporting the positive electrode active material layer:

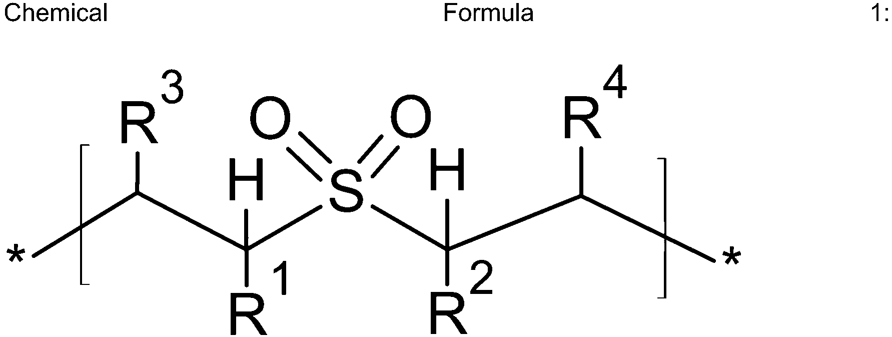

R¹ and R² are each independently hydrogen or a substituted or unsubstituted alkyl group, R³ and R⁴ are each hydrogen or methyl group, and * is a linking site.

Some example embodiments include a rechargeable lithium battery including the positive electrode, a negative electrode, and a non-aqueous electrolyte.

A positive electrode for rechargeable lithium battery according to some example embodiments has desired or improved adhesive strength between a positive electrode active material layer and a current collector, may exhibit low resistance, and accordingly, a rechargeable lithium battery exhibiting desired or improved battery characteristics may be provided.

### BRIEF DESCRIPTION OF THE DRAWINGS

FIG. 1 to FIG. 4 are cross-sectional views schematically showing a rechargeable lithium battery according to some example embodiments.
FIG. 5 is an NMR graph for examining the reactivity between an additive according to some example embodiments and LiOH.

### DETAILED DESCRIPTION

Hereinafter, example embodiments are described in detail. However, these embodiments are examples, and this disclosure is not limited thereto.

As used herein, when a specific definition is not otherwise provided, it is understood that when an element such as a layer, film, region, or substrate is referred to as being "on" another element, the element may be directly on the other element or intervening elements may also be present.

As used herein, when a specific definition is not otherwise provided, what is indicated in the singular may also include the plural. In addition, unless otherwise specified, "A or B" may mean "including A, including B, or including A and B."

As used herein, "combination thereof" may refer to a mixture, a laminate, a composite, a copolymer, an alloy, a blend, a reaction product, and the like of the constituents.

As used herein, when a specific definition is not otherwise provided, "substituted" refers to replacement of at least one hydrogen atom of a compound by a substituent including at least one of a halogen atom (F, CI, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when a specific definition is not otherwise provided, "heterocycloalkyl group," "heterocycloalkenyl group," "heterocycloalkynyl group," and "heterocycloalkylene group" means that at least one heteroatom of N, O, S or P is present in the ring compound of cycloalkyl, cycloalkenyl, cycloalkynyl, and cycloalkylene, respectively.

In chemical formulas of the present disclosure, unless a specific definition is otherwise provided, hydrogen is bonded at the position if (when) a chemical bond is not drawn where it is supposed to be drawn.

As used herein, when a definition is not otherwise provided, the particle diameter may be an average particle diameter. This average particle diameter means the average particle diameter (D50), which means a diameter (D50) of particles having a cumulative volume of 50 vol% in a particle size distribution. The average particle diameter (D50) may be measured using a method well known to those skilled in the art, for example, by using a particle size analyzer, a transmission electron microscope (TEM) photograph or a scanning electron microscope (SEM) photograph. Alternatively, a dynamic light-scattering measurement device is used to perform a data analysis, and the number of particles is counted for each particle size range. From this count, the average particle diameter (D50) may be readily obtained through a calculation. Alternatively, the average particle diameter (D50) may be measured using a laser diffraction method. If (when) measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle size distribution in the measuring device.

In some example embodiments, the average particle diameter may be measured by various methods described above, for example, through a particle size analyzer.

In some example embodiments, the thickness may be measured using an SEM or TEM image of a cross-section, but the present disclosure is not limited thereto, and the thickness may be measured using any method that may measure thickness in the relevant field. The thickness may be an average thickness.

As used herein, soft carbon refers to a graphitizable carbon material that may be graphitized by heat treatment at high temperatures, for example 2800 °C, and hard carbon refers to non-graphitizable carbon material that is not graphitized by heat treatment. The soft carbon and hard carbon are well known in the art. In some example embodiments, crystalline carbon and amorphous carbon may be classified by X-ray diffraction analysis. The crystalline carbon includes natural graphite and artificial graphite. The natural graphite refers to naturally occurring graphite obtained by separation from minerals, and having, upon X-ray diffraction analysis, d002 in a range of about 3.350 Å to about 3.360 Å. The artificial graphite refers to graphite made by graphitization and having, upon X-ray diffraction analysis, d002 in a range of about 3.355 Å to about 3.365 Å. The amorphous carbon has a d002 of less than or equal to about 3.34 Å if (when) analyzed by X-ray diffraction. The X-ray diffraction analysis (XRD) uses CuKα ray as a target line and uses an X-ray diffraction analyzer, for example, X'Pert (manufacturer: Malvern Panalytical), and to improve peak intensity resolution, the monochromator equipment may be removed and measured. The measurement conditions may be 2θ = 10 ° to 80 °, scan speed (°/s) = 0.044 to 0.089, and step size (°/step) = 0.013 to 0.039.

In some example embodiments, the weight average molecular weight may be measured by, e.g., gel permeation chromatography.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

A positive electrode for a rechargeable lithium battery according to some example embodiments includes a positive electrode active material layer including a lithium nickel-based positive electrode active material, a polymer including a repeating unit of Chemical Formula 1, and linear conductive material; and a current collector supporting the positive electrode active material layer.

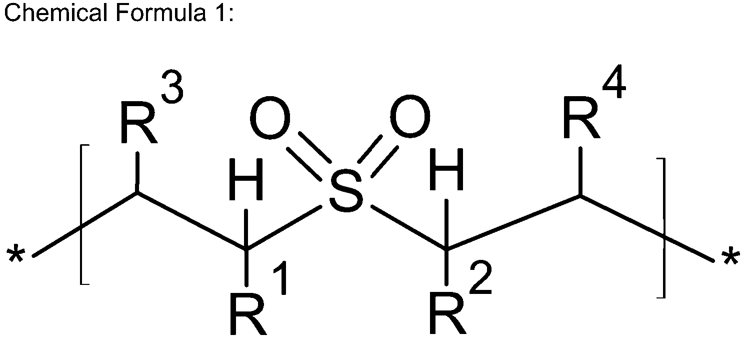

In Chemical Formula 1, R¹ and R² are each independently hydrogen; or a substituted or unsubstituted alkyl group, R³ and R⁴ are each independently hydrogen or methyl group, and * is a linking site.

The alkyl group is or includes a C1 to C20 alkyl group, and may be or include a linear alkyl group or a branched alkyl group.

In a substituted alkyl group, the substituent may be or include at least one of a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof. In some example embodiments, the substituent may be or include at least one of a hydroxy group, a methyl group, hydrogen, or an amine group.

A weight average molecular weight (Mw) of the polymer including the repeating unit of Chemical Formula 1 may be in a range of about 1000 g/mol to about 5000 g/mol.

In some example embodiments, an amount of the polymer may be in a range of about 0.03 wt% to about 0.3 wt%, about 0.03 wt% to about 0.2 wt%, or about 0.03 wt% to about 0.15 wt% based on 100 wt% of the positive electrode active material layer. If (when) the amount of the polymer is within the above range, adhesive strength between the active material layer and the current collector may be improved, and the positive electrode resistance may be reduced.

The polymer may have lithium bound to the terminal end.

In some example embodiments, the lithium nickel-based positive electrode active material may be or include a high-nickel (high-Ni) positive electrode active material having a high nickel content, for example, a lithium nickel-based positive electrode active material containing about 80 mol% or more of nickel.

The lithium nickel-based positive electrode active material may be represented by Chemical Formula 3.

Chemical Formula 3: LiₐNiₓCo_{y}T_{z}O₂.

In Chemical Formula 3, 0.95≤a≤1.15, 0.80≤x≤1, 0≤y≤0.2, 0≤z≤0.2, x+y+z=1, 0≤y+z≤0.2, and T may be Mn or Al.

In some example embodiments, 0.95≤a≤1.15, 0.80≤x<1, 0<y≤0.2, 0<z≤0.2, x+y+z=1, 0<y+z≤0.2, and in some example embodiments, 0.95≤a≤1.15, 0.90≤x<0.98, 0.02≤y≤0.1, 0.02≤z≤0.1, x+y+z=1, 0.02≤y+z≤0.1. Or x, y and z may be in the range of 0.91≤x<0.98, 0.02≤y≤0.09, 0.02 ≤z≤0.09, x+y+z=1, and 0.02≤y+z≤0.09, 0.92≤x<0.98, 0.02≤y≤0.09, 0.02≤z≤0.09, x+y+z=1, and 0.02≤y+z≤0.09, 0.94≤x<0.98, 0.02≤y≤0.06, 0.02≤z≤0.06, x+y+z=1, and 0.02≤y+z≤0.06, or 0.97≤x<0.98, 0.02≤y≤0.03, 0.02≤z≤0.03, x+y+z=1, and 0.02≤y+z≤0.03.

In some example embodiments, T may be or include Al.

The lithium nickel-based positive electrode active material may be or include a positive electrode active material having a high residual lithium content, with the residual lithium content being in a range of about 0.5 wt% to about 2 wt% based on 100 wt% of the lithium nickel-based positive electrode active material.

In some example embodiments, the linear conductive material may be or include a carbon nanotube, a carbon nanofiber, or a combination thereof. If (when) using such linear conductive materials as conductive materials, electronic conductivity may be further improved compared to if (when) using particle conductive materials such as carbon black.

In some example embodiments, an amount of the positive electrode active material may be in a range of about 91 wt% to about 99.6 wt%, about 92 wt% to about 99 wt%, or about 95 wt% to about 99 wt%, based on 100 wt% of the total positive electrode active material layer. In addition, the amount of the linear conductive material may be in a range of about 0.1 wt% to about 9.7 wt%, about 0.1 wt% to about 5 wt%, or about 0.1 wt% to about 1 wt%, based on 100 wt% of the total positive electrode active material layer.

The positive electrode active material layer may further include a binder. If (when) the positive electrode active material layer further includes a binder, an amount of the positive electrode active material may be in a range of about 90 wt% to about 99 wt%, about 92 wt% to about 99 wt%, or about 95 wt% to about 99 wt%, based on 100 wt% of the total positive electrode active material layer. In addition, an amount of the linear conductive material may be in a range of about 0.1 wt% to about 8 wt%, about 0.1 wt% to about 7 wt%, about 0.1 wt% to about 5 wt%, or about 0.1 wt% to about 1 wt%, based on 100 wt% of the total positive electrode active material layer. Additionally, an amount of the binder may be in a range of about 0.1 wt% to about 5 wt%, about 0.1 wt% to about 3 wt%, or about 0.5 wt% to about 3 wt%, based on 100 wt% of the total positive electrode active material layer.

The binder attaches the positive electrode active material particles to each other, and attaches the positive electrode active material to the current collector. Examples of the binder may include at least one of polyvinyl alcohol, carboxymethylcellulose, hydroxypropylcellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, or combinations thereof. In some example embodiments, the binder may be or include at least one of polyvinyl fluoride, polyvinylidene fluoride, or a combination thereof.

According to some example embodiments, a positive electrode may be manufactured using a positive electrode active material layer composition prepared by mixing the lithium nickel-based positive electrode active material, an additive of Chemical Formula 2a or Chemical Formula 2b, and a linear conductive material in a solvent. For example, the positive electrode may be manufactured by coating the positive electrode active material layer composition onto the current collector, and drying and compressing the positive electrode active material layer composition.

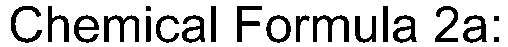

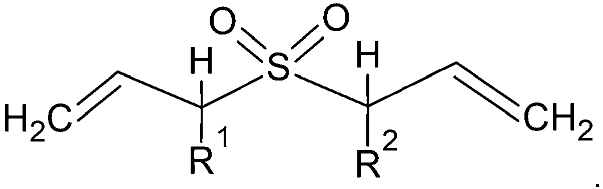

In Chemical Formula 2a, R¹ and R² are each independently hydrogen; or a substituted or unsubstituted alkyl group.

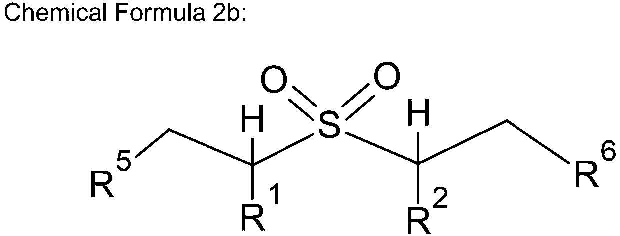

In Chemical Formula 2b, R¹ and R² are each independently hydrogen; or a substituted or unsubstituted alkyl group, and R⁵ and R⁶ are each independently leaving group.

The alkyl group is or includes a C1 to C20 alkyl group, and may be or include a linear alkyl group or a branched alkyl group.

The leaving group may be or include at least one of an alkyl group, a fluorine group, or a moiety of a nitrogen-containing cyclic compound. The nitrogen-containing cyclic compound may be imidazole, pyrazole or triazole. The alkyl group in the leaving group may be or include a C1 to C6 alkyl group.

In some embodiments, the additive may be the compound of Chemical Formula 2a.

An example of Chemical Formula 2a may be Chemical Formula 20.

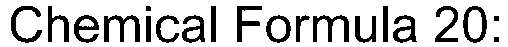

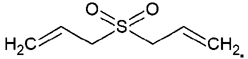

The lithium nickel-based positive electrode active material is a high nickel positive electrode active material with a high nickel content. If (when) a composition for forming a positive electrode active material layer, for example, a positive electrode active material layer slurry, is prepared using this positive electrode active material, gelation may occur. This gelation phenomenon may occur due to a side reaction in which residual lithium contained in the high-nickel positive electrode active material reacts with a binder, such as a polyvinylidene fluoride binder, to form HF.

The additive of Chemical Formula 2a or Chemical Formula 2b is a compound having desired or improved reactivity with LiOH or Li₂CO₃ that may be included as residual lithium in the positive electrode active material. Accordingly, if (when) the additive is used with a positive electrode active material having residual lithium, the additive reacts with the residual lithium before the binder, thereby readily removing the residual lithium. In addition, the removal of residual lithium using the additive may remove residual lithium more effectively than the conventional acid-base reaction using oxalic acid to remove residual lithium. The conventional method of removing residual lithium using an acid-base reaction may present challenges such as gas generation as a by-product of the acid-base reaction and additional gelation problems occurring while the positive electrode active material layer composition is allowed to stand.

The effect of removing residual lithium by using the compound of Chemical Formula 2a or Chemical Formula 2b may be more effectively obtained if (when) used with a positive electrode active material having a high residual lithium content. The positive electrode active material having a high residual lithium content may be or include a lithium nickel-based positive electrode active material of Chemical Formula 3.

In some example embodiments, this residual lithium removal effect is obtained if (when) the compound of Chemical Formula 2a or Chemical Formula 2b is used in the positive electrode active material layer, and may not be obtained if (when) used in the electrolyte. If (when) the compound of Chemical Formula 2a or Chemical Formula 2b is used in an electrolyte, the compound of Chemical Formula 2a or Chemical Formula 2b does not participate in the reaction with residual lithium, but may form an SEI film.

The reaction between the compound of Chemical Formula 2a or Chemical Formula 2b and residual lithium is shown by Reaction Scheme 1, using the compound of Chemical Formula 20 and LiOH as an example. In Reaction Scheme 1, DMDVS represents dimethyl divinyl sulfone. DMDVS formed in Reaction Scheme 1 is immediately polymerized, and a polymer including the repeating unit of Chemical Formula 1 is present within the positive electrode.

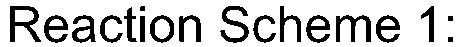

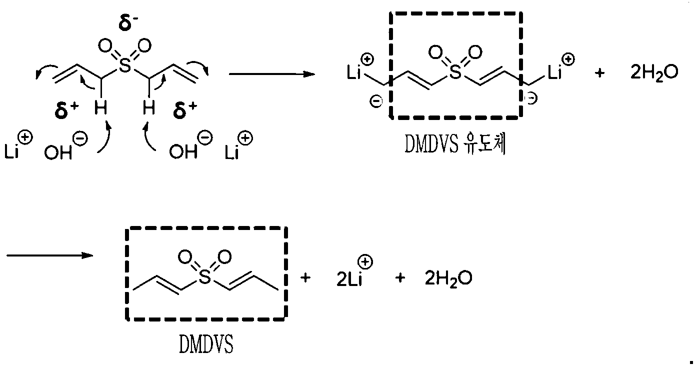

In some example embodiments, an amount of the additive of Chemical Formula 2a or Chemical Formula 2b may be in a range of about 0.01 wt% to about 0.3 wt%, about 0.02 wt% to about 0.2 wt%, or about 0.02 wt% to about 0.15 wt%, based on 100 wt% of the positive electrode active material. If (when) the amount of the compound of Chemical Formula 2a or Chemical Formula 2b is within the above range, side reactions due to residual lithium may be more effectively reduced or suppressed.

The solvent may be or include N-methyl pyrrolidone, but the solvent is not limited thereto.

The mixing process is suitably carried out for a sufficient time for the compound of Chemical Formula 2a or Chemical Formula 2b to react with the residual lithium of the positive electrode active material, and may be carried out for, for example, more than about 10 minutes and less than or equal to about 3 hours, or may be carried out for about 13 minutes to about 2 hours.

According to the mixing process, the compound of Chemical Formula 2a or Chemical Formula 2b first reacts with residual lithium, and then a polymerization reaction occurs, so that the positive electrode active material layer includes the polymer including the repeating unit of Chemical Formula 1.

The positive electrode active material layer composition may further include a binder.

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

In some example embodiments, the current collector supporting the positive electrode active material layer may be or include Al, but the current collector is not limited thereto.

### Negative Electrode:

A negative electrode for a rechargeable lithium battery according to some example embodiments includes a current collector, and a negative electrode active material layer formed on the current collector. The negative electrode active material layer includes a negative electrode active material, and may further include a binder and/or a conductive material.

For example, the negative electrode active material layer may include a range of about 90 wt% to about 99 wt% of the negative electrode active material and a range of about 1 wt% to about 5 wt% of the binder. If (when) the negative electrode active material layer further includes a conductive material, the negative electrode active material may be included in an amount in a range of about 90 wt% to about 99 wt%, the binder in an amount in a range of about 0.5 wt% to about 5 wt%, and the conductive material in an amount in a range of about 0.5 wt% to about 5 wt%.

The negative electrode active material includes at least one of a material capable of reversibly intercalating/deintercalating lithium ions, a lithium metal, a lithium metal alloy, a material capable of doping/dedoping lithium, or transition metal oxide.

The material capable of reversibly intercalating/deintercalating lithium ions may be or include a carbon-based negative electrode active material, for example, crystalline carbon, amorphous carbon, or a combination thereof. The crystalline carbon may be irregular, sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and one or more metals such as or including at least one of Na, K, Rb, Cs, Fr, Be, Mg, Ca, Sr, Si, Sb, Pb, In, Zn, Ba, Ra, Ge, Al, and Sn.

The material being capable of doping/dedoping lithium may be or include a Si-based negative electrode active material or a Sn-based negative electrode active material. The Si-based negative electrode active material may be of include at least one of silicon, a silicon-carbon composite, SiOₓ (0 < x ≤ 2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and carbon. The carbon may include amorphous carbon, or amorphous carbon and crystalline carbon. The crystalline carbon may be or include natural graphite, artificial graphite or a combination thereof in the form of irregular-shaped, plate-shaped, flake-shaped, spherical-shaped or fibrous-shaped graphite. The amorphous carbon may be or include at least one of soft carbon, hard carbon, a mesophase pitch carbonized product, calcined coke, or a combination thereof.

The silicon-carbon composite may be in the form of silicon particles, and amorphous carbon coated on the surface of the silicon particles. For example, the silicon-carbon composite may include silicon particles and an amorphous carbon coating layer on the surface of the silicon particles. In another example embodiments, the silicon-carbon composite may include a secondary particle (core) in which silicon primary particles are aggregated, and an amorphous carbon coating layer (shell) on the surface of the secondary particle. The amorphous carbon may also be positioned between the silicon primary particles, so that, for example, the silicon primary particles may be coated with the amorphous carbon. For example, the secondary particles may be dispersed in an amorphous carbon matrix. The silicon primary particles may be or include nanosilicon particles. An average particle diameter of the nanosilicon particles may be in a range of about 10 nm to about 900 nm, about 10 nm to about 800 nm, about 10 nm to about 500 nm, about 10 nm to about 300 nm, or about 10 nm to about 200 nm. If (when) the average particle diameter of the nanosilicon particles is within the above range, excessive volume expansion that occurs during charging and discharging may be reduced or suppressed, and disconnection of the conductive path due to particle crushing during charging and discharging may be reduced or prevented. In some example embodiments, the particle size of the silicon secondary particles need not be particularly limited.

A thickness of the amorphous carbon coating layer may be controlled as desired, but may be, for example, in a range of about 2 nm to about 800 nm, about 5 nm to about 600 nm, about 10 nm to about 400 nm, or about 20 nm to about 200 nm. The thickness of the amorphous carbon coating layer may be measured by SEM or TEM images of a cross-section of the silicon-carbon composite, but is not limited thereto, and any method capable of measuring the thickness of the amorphous carbon coating layer in the relevant field may be used.

The average particle size of the silicon-carbon composite may be suitably controlled, and may be, for example, less than or equal to about 30 µm, for example, in a range of about 1 µm to about 30 µm, about 2 µm to about 25 µm, about 3 µm to about 20 µm, or about 5 µm to about 15 µm.

Based on 100 wt% of the silicon-carbon composite, an amount of the silicon particles may be in a range of about 30 wt% to about 70 wt%, or about 40 wt% to about 65 wt%. An amount of the amorphous carbon may be in a range of about 30 wt% to about 70 wt%, or about 35 wt% to about 60 wt%, based on 100 wt% of the total silicon-carbon composite. If (when) the amount of the silicon particles and amorphous carbon satisfies the above range, higher capacity may be achieved.

In some example embodiments, the silicon-carbon composite may include a core including silicon particles and crystalline carbon, and an amorphous carbon coating layer on a surface of the core. For example, the silicon-carbon composite may include a core including secondary particles where silicon primary particles are aggregated with crystalline carbon, and an amorphous carbon coating layer on the core. The amorphous carbon may be located between silicon primary particles or between crystalline carbon, so that amorphous carbon may be filled between silicon primary particles or crystalline carbon.

If (when) the silicon-carbon composite includes silicon particles, crystalline carbon, and amorphous carbon, the amount of the crystalline carbon may be in a range of about 10 wt% to about 70 wt%, or about 10 wt% to about 60 wt%, based on a total 100 wt% of the silicon particles, the amorphous carbon, and the crystalline carbon. If (when) crystalline carbon is included in the above amount range, conductivity may be further improved.

An amount of the amorphous carbon may be in a range of about 20 wt% to about 40 wt%, for example about 20 wt% to about 30 wt%, based on 100 wt% of the total of the silicon particles, the amorphous carbon, and the crystalline carbon. An amount of the silicon particles may be in a range of about 10 wt% to about 70 wt%, for example, about 10 wt% to about 60 wt%, based on 100 wt% of the total of the silicon particles, amorphous carbon, and crystalline carbon.

In some example embodiments, the negative electrode may further include a carbon-based negative electrode active material together with a silicon-based negative electrode active material as the negative electrode active material. If (when) the silicon-based negative electrode active material and carbon-based negative electrode active material are mixed together, a mixing ratio of the silicon-based negative electrode active material and the carbon-based negative electrode active material may be a weight ratio in a range of about 1:99 to about 50:50. In some example embodiments, the mixing ratio of the silicon-based negative electrode active material and the carbon-based negative electrode active material may be a weight ratio in a range of about 5:95 to about 20:80.

The binder improves binding properties of negative electrode active material particles with one another and with a current collector. The binder may be or include a non-aqueous binder, an aqueous binder, a dry binder, or a combination thereof.

The non-aqueous binder may be or include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonatedpolyethylene, latex, polyesterresin, a (meth)acrylic resin, a phenolic resin, an epoxy resin, polyvinyl alcohol, and a combination thereof.

If (when) the aqueous binder is used as the negative electrode binder, a cellulose-based compound capable of imparting viscosity may be further included. The cellulose-based compound includes one or more of carboxymethyl cellulose, hydroxypropylmethyl cellulose, methyl cellulose, or alkali metal salts thereof. The alkali metal may be or include at least one of Na, K, or Li. The cellulose-based compound may be called a thickener because the cellulose-based compound provides viscosity, and may also be called a binder. Accordingly, an amount of the cellulose-based compound may be adjusted as desired within the amount of binder used.

The dry binder is or includes a polymer material capable of being fiberized, and may include, for example, at least one of polytetrafluoroethylene, polyvinylidene fluoride, polyvinylidene fluoride-hexafluoropropylene copolymer, polyethylene oxide, or a combination thereof.

The conductive material imparts conductivity to the electrode, and any electrically conductive material may be used as a conductive material unless the electrically conductive material causes an adverse chemical change in a battery. Examples of the conductive material may be or include a carbon-based material such as at least one of natural graphite, artificial graphite, carbon black, acetylene black, Ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

### Electrolyte:

An electrolyte for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, t-butyl acetate, methyl propionate, ethyl propionate, decanolide, γ-butyrolactone, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, or may include a double bond, an aromatic ring, or an ether group, and the like); amides such as dimethylformamide; dioxolanes such as 1,3-dioxolane, 1,4-dioxolane, and the like; sulfolanes, and the like. The non-aqueous organic solvent may be used alone, or in a mixture of two or more types of solvents.

The non-aqueous organic solvent may be used alone, or in combination of two or more solvents.

In addition, if (when) using a carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethylene carbonate, vinylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, or a combination thereof as an additive.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one or more of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers in a range from 1 to 20), lithium trifluoromethane sulfonate, lithium tetrafluoroethanesulfonate, lithium difluorobis(oxalato)phosphate (LiDFBOP), lithium bis(oxalato) borate (LiBOB).

### Separator:

The rechargeable lithium battery may further include a separator between the negative electrode and the positive electrode, depending on a type of the battery. Examples of a suitable separator material include at least one of polyethylene, polypropylene, polyvinylidene fluoride, and multi-layers thereof, or may be or include a mixed multi-layers such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof, on one surface, or on both surfaces, of the porous substrate.

The porous substrate may be or include a film formed of or including at least one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (TEFLON), or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

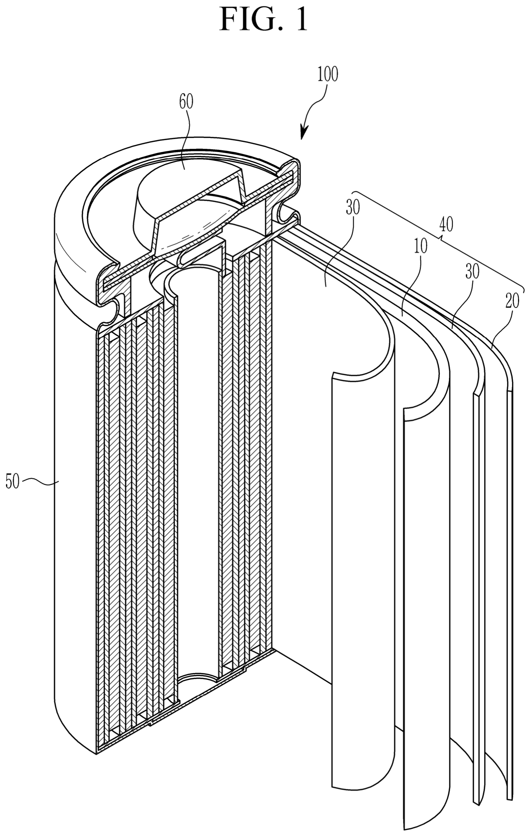

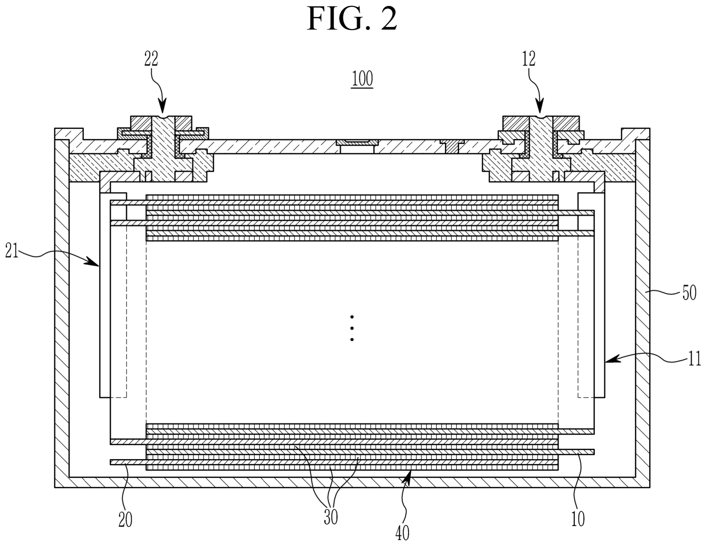

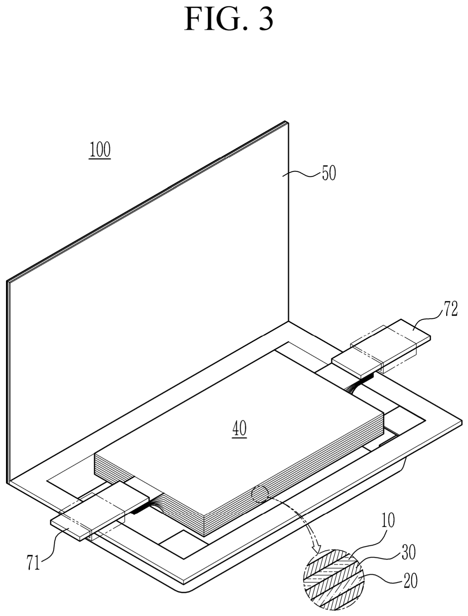

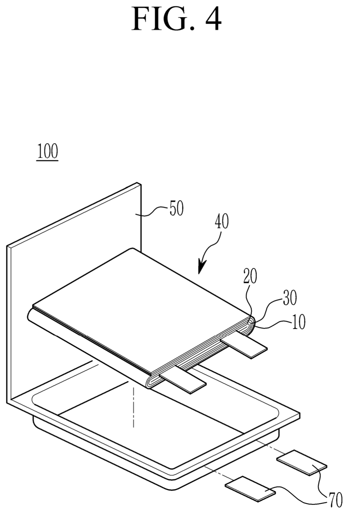

The rechargeable lithium battery may be classified into cylindrical, prismatic, pouch, or coin-type batteries, and the like depending on its shape. FIG. 1 to FIG. 4 are schematic views showing the rechargeable lithium battery according to some example embodiments, where FIG. 1 is a cylindrical battery, FIG. 2 is a prismatic battery, and FIG. 3 and FIG. 4 are a pouch-type battery. Referring to FIG. 1 to FIG. 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50 as shown in FIG. 1. In addition, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electric path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Experimental Examples 1 to 4:

An experiment was conducted to investigate the reactivity between a compound of Chemical Formula 20 and LiOH.

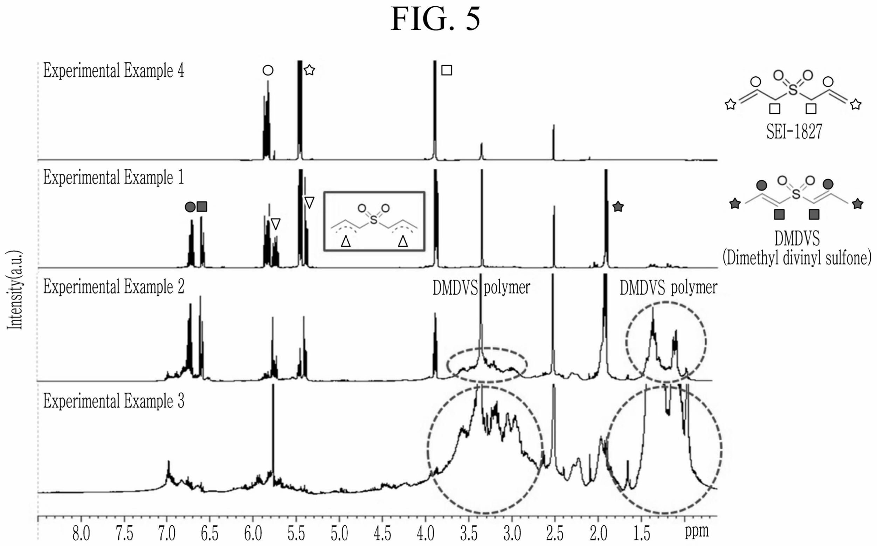

The compound of Chemical Formula 20 and LiOH were mixed in a 1:2 molar ratio of the compound of Chemical Formula 20:LiOH in a DMSO-d6 (dimethyl sulfoxide in which 6 hydrogens are substituted with deuterium) solvent at room temperature (25 °C) for 10 minutes (Experimental Example 1), mixed for 30 minutes (Experimental Example 2), and mixed for 2 hours (Experimental Example 3). 1H NMR was measured for the mixtures, and the results are shown in FIG. 5. In addition, the 1H NMR results of only the compound of Chemical Formula 20 (Experimental Example 4) are also shown in FIG. 5.

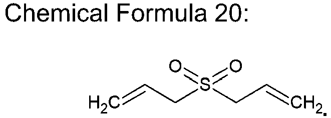

As shown in FIG. 5, if (when) the mixing process was performed for 30 minutes and 2 hours, the compound of Chemical Formula 20 and LiOH reacted, and a dimethyl divinyl sulfone polymer peak, that is, a polymer including a repeating unit in which R¹ and R² are hydrogen in Chemical Formula 1, appears. On the contrary, if (when) the mixing process was performed for 10 minutes, results similar to the NMR of the compound of Chemical Formula 20 appeared.

### Example 1:

98.42 wt% of LiNi_{0.94}Co_{0.05}Al_{0.01}O₂ positive electrode active material (residual lithium content: 1.7 wt% based on 100 wt% of positive electrode active material), 0.03 wt% of the compound of Chemical Formula 20, 1.2 wt% of polyvinylidene fluoride binder, and 0.35 wt% of carbon nanotube conductive material were mixed in N-methyl pyrrolidone solvent to prepare a positive electrode active material layer slurry. The mixing process was performed for 13 minutes.

The positive electrode active material layer slurry was applied to an Al substrate, dried, and compressed to manufacture a positive electrode.

A half-cell was fabricated using the positive electrode, a lithium metal counter electrode, and an electrolyte. As the electrolyte, ethylene carbonate, ethylmethyl carbonate, and dimethyl carbonate (volume ratio of 20:40:40) in which 1.5 M LiPF₆ was dissolved were used.

### Example 2:

A positive electrode and a half-cell were fabricated in the same manner as in Example 1 except that a positive electrode active material layer slurry was prepared by mixing 98.415 wt% of LiNi_{0.94}Co_{0.05}Al_{0.01}O₂ positive electrode active material, 0.035 wt% of the compound of Chemical Formula 20, 1.2 wt% of polyvinylidene fluoride binder, and 0.35 wt% of carbon nanotube conductive material in N-methyl pyrrolidone solvent.

### Example 3:

A positive electrode and a half-cell were fabricated in the same manner as in Example 1 except that a positive electrode active material layer slurry was prepared by mixing 98.4 wt% of LiNi_{0.94}Co_{0.05}Al_{0.01}O₂ positive electrode active material, 0.05 wt% of the compound of Chemical Formula 20, 1.2 wt% of polyvinylidene fluoride binder, and 0.35 wt% of carbon nanotube conductive material in N-methyl pyrrolidone solvent.

### Example 4:

A positive electrode and a half-cell were fabricated in the same manner as in Example 1 except that a positive electrode active material layer slurry was prepared by mixing 98.42 wt% of LiNi_{0.90}Co_{0.05}Al_{0.05}O₂ positive electrode active material, 0.03 wt% of the compound of Chemical Formula 20, 1.2 wt% of polyvinylidene fluoride binder, and 0.35 wt% of carbon nanotube conductive material in N-methyl pyrrolidone solvent.

### Example 5:

A positive electrode and a half-cell were fabricated in the same manner as in Example 4 except that a positive electrode active material layer slurry was prepared by mixing 98.415 wt% of LiNi_{0.90}Co_{0.05}Al_{0.05}O₂ positive electrode active material, 0.035 wt% of the compound of Chemical Formula 20, 1.2 wt% of polyvinylidene fluoride binder, and 0.35 wt% of carbon nanotube conductive material in N-methyl pyrrolidone solvent.

### Example 6:

A positive electrode and a half-cell were fabricated in the same manner as in Example 4 except that a positive electrode active material layer slurry was prepared by mixing 98.4 wt% of LiNi_{0.90}Co_{0.05}Al_{0.05}O₂ positive electrode active material, 0.05 wt% of the compound of Chemical Formula 20, 1.2 wt% of polyvinylidene fluoride binder, and 0.35 wt% of carbon nanotube conductive material in N-methyl pyrrolidone solvent.

### Comparative Example 1:

A positive electrode and a half-cell were fabricated in the same manner as in Example 1 except that a positive electrode active material layer slurry was prepared by mixing 98.45 wt% of LiNi_{0.94}Co_{0.05}Al_{0.01}O₂ positive electrode active material, 1.2 wt% of polyvinylidene fluoride binder, and 0.35 wt% of carbon black conductive material in N-methyl pyrrolidone solvent.

### Comparative Example 2:

A positive electrode and a half-cell were fabricated in the same manner as in Example 4 except that a positive electrode active material layer slurry was prepared by mixing 98.45 wt% of LiNi_{0.90}Co_{0.05}Al_{0.05}O₂ positive electrode active material, 1.2 wt% of polyvinylidene fluoride binder, and 0.35 wt% of carbon black conductive material in N-methyl pyrrolidone solvent.

The compositions of Examples 1 to 6 and Comparative Examples 1 and 2 are shown in Table 1 below.

**Table 1:**

| | Positive electrode active material, wt% | Compound of Chemical Formula 20 wt% | Binder wt% | Conductive material wt% |
|---|---|---|---|---|
| Example 1 | LiNi_{0.94}Co_{0.05}Al_{0.01}O₂, 98.42 | 0.03 | 1.2 | 0.35 |
| Example 2 | LiNi_{0.94}Co_{0.05}Al_{0.01}O₂, 98.415 | 0.035 | 1.2 | 0.35 |
| Example 3 | LiNi_{0.94}Co_{0.o5}Al_{0.01}O₂, 98.4 | 0.05 | 1.2 | 0.35 |
| Comparative Example 1 | LiNi_{0.94}Co_{0.05}Al_{0.01}O₂, 98.45 | 0 | 1.2 | 0.35 |
| Example 4 | LiNi_{0.90}Co_{0.05}Al_{0.05}O₂, 98.42 | 0.03 | 1.2 | 0.35 |
| Example 5 | LiNi_{0.90}Co_{0.05}Al_{0.05}O₂, 98.415 | 0.035 | 1.2 | 0.35 |
| Example 6 | LiNi_{0.90}Co_{0.05}Al_{0.05}O₂, 98.4 | 0.05 | 1.2 | 0.35 |
| Comparative Example 2 | LiNi_{0.90}Co_{0.05}Al_{0.05}O₂, 98.45 | 0 | 1.2 | 0.35 |

### Experimental Example 1) Adhesive Strength Evaluation

The binding force of the positive electrodes manufactured according to Examples 1 to 6 and Comparative Examples 1 and 2 was measured by the following process.

A tape attached to a slide glass was pasted on the positive electrode active material layer, and using a 180° UTM tensile strength tester, while peeling the tape and the positive electrode active material layer, the binding force was measured. Herein, the peeling speed was set to 10 mm/min, and measurement was performed 3 times to obtain an average value of the force required to peel 40 mm after the start of peeling. The results are shown in Table 2 below.

### Experimental Example 2) Residual Lithium Content Evaluation

The residual lithium content of the LiNi_{0.94}Co_{0.05}Al_{0.01}O₂ positive electrode active material used in Examples 1 to 3 and Comparative Example 1 and the LiNi_{0.90}Co_{0.05}Al_{0.05}O₂ positive electrode active material used in Examples 4 to 6 and Comparative Example 2 was measured as follows.

The residual lithium content was measured by an acid-base titration method, which was obtained by adding 50 g of positive electrode active material to a beaker together with 100 ml of ultrapure water, stirring, separating the solution and powder from the stirred solution using a filter paper, and then performing pH titration on the obtained solution using 0.1N hydrochloric acid.

As a result, the residual lithium content of the LiNi_{0.94}Co_{0.05}Al_{0.01}O₂ positive electrode active material was 1.1 wt% based on 100 wt% of the positive electrode active material, and the residual lithium content of the LiNi_{0.90}Co_{0.05}Al_{0.05}O₂ positive electrode active material was 0.9 wt%.

### Experimental Example 3) Direct current internal resistance (DC-IR) Evaluation

The half-cells manufactured according to Examples 1 to 6 and Comparative Examples 1 and 2 were subjected to charging and discharging once under conditions of 0.2C charging and 0.2C discharging at 25 °C, and at SOC50 (a state charged to have 50% charge capacity if (when) the total charge capacity of the battery is 100%, which means a state in which 50% is discharged if (when) viewed as a state during discharge), a voltage drop (V) occurring while flowing current at 1C for 1 second was measured. From this result, direct current internal resistance (DC-IR) was calculated. Among the results, the results of Examples 1 to 3 and Comparative Example 1 are shown in Table 2 below.

**Table 2:**

| | Adhesive strength (gf/mm) | DC-IR (mΩ) |
|---|---|---|
| Example 1 | 0.69 | 12.4 |
| Example 2 | 0.75 | 12.0 |
| Example 3 | 0.71 | 12.8 |
| Comparative Example 1 | 0.65 | 13.3 |

As shown in Table 2, the cells of Examples 1 to 3 using the additive of Chemical Formula 2a exhibited superior adhesive strength while exhibiting lower resistance compared to the cell of Comparative Example 1 not including the additive.

While this disclosure has been described in connection with what is presently considered to be practical example embodiments, it is to be understood that the disclosure is not limited to the disclosed example embodiments, but, on the contrary, is intended to cover various modifications and equivalent arrangements included within the spirit and scope of the appended claims.

## Claims

1. A positive electrode (10) for a rechargeable lithium battery (100), the positive electrode (10) comprising:
a positive electrode active material layer including a lithium nickel-based positive electrode active material, a polymer including a repeating unit of Chemical Formula 1, and a linear conductive material; and
a current collector supporting the positive electrode active material layer. 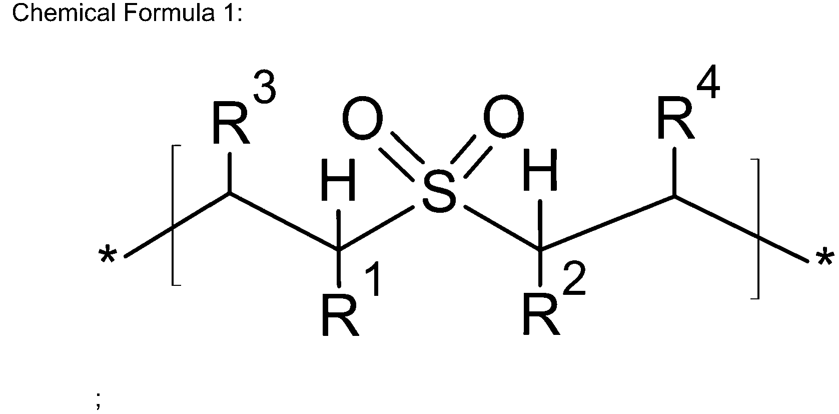 wherein:
R¹ and R² are each independently hydrogen or a substituted or unsubstituted alkyl group;
R³ and R⁴ are each independently hydrogen or methyl group, and
* is a linking site.

2. The positive electrode (10) for the rechargeable lithium battery (100) as claimed in claim 1, wherein an amount of the polymer is in a range of about 0.03 wt% to about 0.3 wt% based on 100 wt% of the positive electrode active material layer.

3. The positive electrode (10) for the rechargeable lithium battery (100) as claimed in claim 1 or 2, wherein the lithium nickel-based positive electrode active material comprises greater than or equal to about 80 mol% of nickel.

4. The positive electrode (10) for the rechargeable lithium battery (100) as claimed in any of the claims 1 to 2, wherein the lithium nickel-based positive electrode active material is represented by Chemical Formula 3:
Chemical Formula 3: LiₐNiₓCo_{y}T_{z}O₂;
wherein:
0.95≤a≤1.15, 0.80≤x≤1, 0≤y≤0.2, 0≤z≤0.2, x+y+z=1, 0≤y+z≤0.2; and
T comprises one of Mn and Al.

5. The positive electrode (10) for the rechargeable lithium battery (100) as claimed in any of the claims 1 to 4, wherein 0.95≤a ≤ 1.15, 0.80 ≤ x<1, 0<y≤0.2, 0<z≤0.2, x+y+z=1, and 0<y+z≤0.2.

6. The positive electrode (10) for the rechargeable lithium battery (100) as claimed in any of the claims 1 to 5, wherein 0.95≤a≤1.15, 0.90≤ x<0.98, 0.02 ≤ y ≤ 0.1, 0.02 ≤ z ≤ 0.1, x+y+z=1, and 0.02 ≤ y+z ≤ 0.1.

7. The positive electrode (10) for the rechargeable lithium battery (100) as claimed in any of the claims 1 to 6, wherein T comprises Al.

8. The positive electrode (10) for the rechargeable lithium battery (100) as claimed in any of the claims 1 to 7, wherein the linear conductive material comprises at least one of carbon nanotube, carbon nanofiber, and a combination thereof.

9. The positive electrode (10) for the rechargeable lithium battery (100) as claimed in any of the claims 1 to 8, wherein the positive electrode is manufactured using a positive electrode active material layer composition prepared by mixing the lithium nickel-based positive electrode active material, an additive of Chemical Formula 2a or Chemical Formula 2b, and a linear conductive material in a solvent; 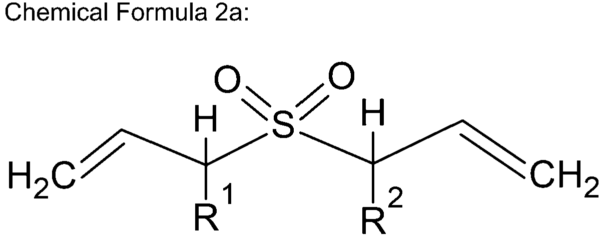 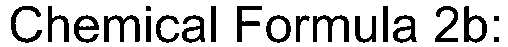 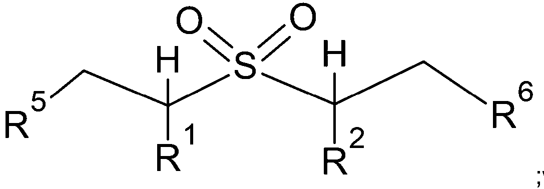 wherein:
R¹ and R² are each independently hydrogen or a substituted or unsubstituted alkyl group; and
R⁵ and R⁶ are each independently a leaving group.

10. The positive electrode (10) for the rechargeable lithium battery (100) as claimed in any of the claims 1 to 9, wherein the mixing is performed for more than about 10 minutes and less than or equal to about 3 hours.

11. The positive electrode (10) for the rechargeable lithium battery (100) as claimed in any of the claims 1 to 10, wherein the leaving group comprises at least one of an alkyl group, a fluoro group, and a moiety of a nitrogen-containing cyclic compound.

12. The positive electrode (10) for the rechargeable lithium battery (100) as claimed in any of the claims 1 to 11, wherein an amount of the additive of Chemical Formula 2a or Chemical Formula 2b is in a range of about 0.01 wt% to about 0.3 wt% based on 100 wt% of an amount of the positive electrode active material.

13. The positive electrode (10) for the rechargeable lithium battery (100) as claimed in any of the claims 1 to 12, wherein the lithium nickel-based positive electrode active material has a residual lithium content in a range of about 0.5 wt% to about 2 wt% based on 100 wt% of the lithium nickel-based positive electrode active material.

14. The positive electrode (10) for the rechargeable lithium battery (100) as claimed in any of the claims 1 to 13, wherein the positive electrode active material layer further comprises a binder. wherein the binder preferably comprises at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acryl resin, a polyester resin, nylon, and a combination thereof; more preferably the binder comprises at least one of polyvinyl fluoride, polyvinylidene fluoride, and a combination thereof.

15. A rechargeable lithium battery (100), comprising
the positive electrode (10) as claimed in any one of claim 1 to claim 14;
a negative electrode (20); and
a non-aqueous electrolyte.
